# EUROPÄISCHE PATENTSCHRIFT

(11) **EP 0 920 987 B1**
(45) Veröffentlichungstag und Bekanntmachung des Hinweises auf die Patenterteilung: **08.09.2004**
(21) Anmeldenummer: 98122138.5
(22) Anmeldetag: 24.11.1998
(51) Int. Cl.: B32B 27/18, B60K 37/00, B05D 7/00, B60N 2/44

(54) **Kunststoff-Innenraummaterial mit Aromastoff**
Plastic covering material containing fragrance
Tenture plastique parfumée

(30) Priorität: 05.12.1997 DE 19754140
(43) Veröffentlichungstag der Anmeldung: 09.06.1999
(73) Patentinhaber: ERA BESCHICHTUNG GmbH & CO. KG, 31592 Stolzenau (DE)
(72) Erfinder: Keller, Maik, 31582 Nienburg (DE)
(74) Vertreter: Winkler, Andreas, Dr.

(56) Entgegenhaltungen:
- EP-A- 0 113 085
- WO-A-86/05444
- WO-A-97/26020
- DATABASE WPI Section Ch, Week 7409 Derwent Publications Ltd., London, GB; Class A14, AN 74-16057V XP002098769 & JP 48 022132 A (TAKASAGO PERFUMERY CO LTD), 20. März 1973
- PATENT ABSTRACTS OF JAPAN vol. 013, no. 290 (C-614), 5. Juli 1989 & JP 01 085375 A (TOYO CLOTH KK), 30. März 1989
- PATENT ABSTRACTS OF JAPAN vol. 016, no. 394 (C-0976), 21. August 1992 & JP 04 130172 A (NISSAN MOTOR CO LTD), 1. Mai 1992
- DATABASE WPI Section Ch, Week 8604 Derwent Publications Ltd., London, GB; Class A82, AN 86-026777 XP002098770 & SU 1 165 698 A (BELIK A K), 7. Juli 1985
- DATABASE WPI Section Ch, Week 7933 Derwent Publications Ltd., London, GB; Class A14, AN 79-60477B XP002098771 & JP 54 083954 A (MIYOSHI K), 4. Juli 1979

## Beschreibung

Die vorliegende Erfindung betrifft ein Innenraummaterial auf der Basis von Kunststoff mit einem Gehalt an mindestens einem schwerflüchtigen Aromastoff, Verfahren zu seiner Herstellung sowie Verwendungen desselben.

In Innenräumen werden häufig Materialien auf der Basis von Kunststoff eingesetzt. Dabei wird vielfach die Zielstellung verfolgt, Naturmaterialien nachzustellen. Das gilt in jüngster Zeit verstärkt, weil die anspruchsvolle Ausgestaltung von Innenräumen mit hochwertigen Materialien immer stärker in den Mittelpunkt des Interesses rückt.

Dabei erfolgt die Nachahmung von Naturmaterialien derzeit ausschließlich visuell, d.h. durch entsprechende Oberflächengestaltung, die in vielen Fällen schon täuschend echt wirkt.

Aus den JP-4130172, SU-165698, JP 54083954, WO-A-86/05444, EP-A-113085, JP-48022132 und JP-62239191 sind Beschichtungen oder Materialien bekannt, die einen Aromastoff enthalten, der über einen bestimmten Zeitraum aus der Beschichtung oder dem Material abgegeben werden soll.

Der Erfindung liegt die Aufgabe zugrunde, ein Innenmaterial auf der Basis von Kunststoff zur Verfügung zu stellen, das in weitergehender Weise, als bisher bekannt, eine möglichst umfassende Nachstellung der sinnlichen Wahrnehmung von Naturmaterialien ermöglicht.

Erfindungsgemäß wird diese Aufgabe dadurch gelöst, daß der Aromastoff durch darüberliegende Material- und/oder Lackschichten abgedeckt ist, so daß seine Diffusion und damit Emission ausreichend behindert wird, um eine langanhaltende Geruchswirkung zu entfalten.

Vorzugsweise wird dabei als Basismaterial ein im wesentlichen geruchsneutrales Kunststoffmaterial eingesetzt, vorzugsweise ein Kunststoff auf der Basis von PVC, insbesondere Weich-PVC, Polyurethan, Polyolefin, Polyester, ABS, Polymethacrylat, Polycarbonat, Polyacrylat oder Mischpolymeren.

Ein derartiges Basismaterial hat den Vorteil, daß die gezielt eingesetzte Geruchsbeeinflussung durch den Zusatz von Aromastoffen nicht durch inhärente Ausdünstungen der Kunststoffmaterialien selbst überlagert wird. In dieser Hinsicht sind in letzter Zeit deutliche Fortschritte bei der Erstellung geruchsneutraler Kunststoffmaterialien, insbesondere Kunststoff-Folien, insbesondere auf Basis von Weich-PVC, erzielt worden.

Durch den erfindungsgemäßen Zusatz von Aromastoffen zu Kunststoffmaterial, insbesondere geruchsneutralem Kunststoffmaterial, werden die Aromastoffe im Endprodukt definiert und unverfälscht wahrnehmbar. Dadurch wird die visuelle Ausstrahlung des Innenraums durch die Geruchswahrnehmung wirkungsvoll unterstützt.

Bevorzugt ist vorgesehen, die Struktur des Materials und den (die) Aromastoff(e) aufeinander abzustimmen.

So wird beispielsweise bei einer Materialstruktur, die Leder imitiert, vorzugsweise ein Lederaromaöl eingesetzt bzw. bei einer Materialstruktur, die Holz imitiert, ein Holzaromaöl.

In einer bevorzugten Ausführungsform der Erfindung ist vorgesehen, daß, ggf. zusätzlich, mindestens ein Aromastoff eingesetzt wird, der den Geruch einer frischen Umgebung nachbildet, beispielsweise Meeresgerucharoma oder Zitronenaroma; so kann z.B. eine Leinenstruktur mit einem entsprechenden Frischearoma ausgerüstet werden.

Weiterhin betrifft die Erfindung ein Verfahren zur Herstellung des erfindungsgemäßen Innenraummaterials, das dadurch gekennzeichnet ist, daß der mindestens eine schwerflüchtige Aromastoff durch darüberliegende Material- und/oder Lackschichten abgedeckt wird, so daß seine Diffusion und damit Emission ausreichend behindert wird, um eine langanhaltende Wirkung zu sichern.

Dabei wird (werden) der (die) schwerflüchtige(n) Aromastoffe bevorzugt dem Deckstrich oder einem darunterliegenden Kompakt- oder Schaumstrich zugesetzt.

Alternativ wird (werden) der (die) schwerflüchtige(n) Aromastoff(e) einer Lackschicht zugesetzt.

In einer besonders bevorzugten Ausführungsform der Erfindung kann auch vorgesehen sein, daß das Innenmaterial abschließend zur Oberflächengestaltung unter milden Bedingungen geprägt wird.

Die Erfindung betrifft weiterhin die Verwendung des erfindungsgemäßen Innenraummaterials im PKW-Innenraum oder als Wandverkleidungsmaterial in Wohn- und Gesellschaftsräumen.

Wesentlicher Punkt der Erfindung ist, daß die Aromastoffe in Materialschichten oder darüberliegende Lackschichten derart fixiert werden, daß dadurch eine geringe Flüchtigkeit und eine lange Wahrnehmung gewährleistet ist. Jeweils geeignet dafür sind insbesondere eine untere Lackschicht oder eine darunterliegende Materialschicht.

Hinsichtlich der Mengen des (der) zuzusetzenden Aromastoffes (Aromastoffe) ist festzuhalten, daß dieser im Einzelfall auf die Bedürfnisse abzustellen sind. So ist es beispielsweise bei bestimmten Aromatstoffen möglich, schon mit sehr geringen Mengen eine große Wirkung zu erzielen, während bei anderen Aromastoffen größere Mengen zugesetzt werden müssen. Darüber hinaus hängen die Mengen aber auch von der Natur des eingesetzten Basismaterials bzw. der Material- bzw. Lackschichten, in die die Aromastoffe eingebunden werden.

### Beispiel 1

Ein Lederaromaöl, wie kommerziell erhältlich, wird einem zur Oberflächenausrüstung von PVC-Weich-Folien üblichen Basislack beigefügt (beispielsweise in einer Menge von 0,5 bis 3,0 Gew.-%). Nach der Oberflächenformgebung (Narbung) des Kunststoff-Basismaterials erfolgt zunächst ein Lackauftrag mit dem genannten Basislack, der anschließend mit mindestens einer weiteren Lackschicht, die keinen Aromastoff enthält, überzogen wird.

Soll die geruchsbeeinflußte Schicht einer Oberflächengestaltung, wie z.B. durch Prägen, unterzogen werden, müssen hierfür sehr milde Bedingungen gewählt werden, um eine Beeinträchtigung der Geruchsechtheit oder ein übermäßiges Verdunsten zu vermeiden.

Der in die untere Lackschicht eingebrachte Aromastoff kann nur langsam verdunsten, da seine Diffusion durch die Basislackschicht und die darüberliegenden Lackschichten erfolgen muß. Damit und durch eine geringe Grundflüchtigkeit wird eine Wirksamkeit über mehrere Jahre gewährleistet.

### Beispiel 2

Ein Lederaromaöl wird in den Obergrundstrich oder den darunterliegenden Schaumstrich eines PVC-Kunstleders eingebracht (beispielsweise in einer Menge von 0,5 bis 3,0 Gew.-%). Unter möglichst niedrigen Geliertemperaturen wird der extrem schwerflüchtige Lederaromastoff als Pulvermaterial eingebunden. Der Oberstrich des Kunstleders wird mit mehreren Lackschichten überzogen. Das Kunstleder kann nachträglich zur Oberflächengestaltung unter milden Bedingungen geprägt werden.

Die Wirksamkeit über einen Zeitraum von mehreren Jahren wird durch eine in diesem Falle noch stärkere Behinderung der Diffusion als in Beispiel 1 gewährleistet.

## Patentansprüche

1. Innenraummaterial auf der Basis von Kunststoff mit einem Gehalt an mindestens einem schwerflüchtigen Aromastoff, **dadurch gekennzeichnet, daß** der Aromastoff durch darüberliegende Material- und/oder Lackschichten abgedeckt ist, so daß seine Diffusion und damit Emission ausreichend behindert wird, um eine langanhaltende Geruchswirkung zu entfalten.

2. Innenraummaterial nach einem der vorangehenden Ansprüche, **dadurch gekennzeichnet, daß** als Basismaterial ein im wesentlichen geruchsneutrales Kunststoffmaterial eingesetzt wird.

3. Innenraummaterial nach Anspruch 1 oder 2, **dadurch gekennzeichnet, daß** als Basismaterial ein Kunststoff auf der Basis von PVC, Polyurethan, Polyolefin, ABS, Polymethacrylat, Polycarbonat, Polyacrylat oder Mischpolymeren eingesetzt wird.

4. Innenraummaterial nach Anspruch 1, 2 oder 3, **dadurch gekennzeichnet, daß** die Struktur des Materials und der (die) Aromastoff(e) aufeinander abgestimmt sind.

5. Innenraummaterial nach Anspruch 4, **dadurch gekennzeichnet, daß** bei einer Materialstruktur, die Leder imitiert, ein Lederaromaöl eingesetzt wird.

6. Innenraummaterial nach Anspruch 3 oder 4, **dadurch gekennzeichnet, daß** bei einer Materialstruktur, die Holz imitiert, ein Holzaromaöl eingesetzt wird.

7. Innenraummaterial nach einem der Ansprüche 4 bis 6, **dadurch gekennzeichnet, daß**, ggf. zusätzlich, mindestens ein Aromastoff eingesetzt wird, der den Geruch einer frischem Umgebung nachbildet.

8. Innenraummaterial nach Anspruch 7, **dadurch gekennzeichnet, daß** als Aromastoff Meeresgerucharoma oder Zitronenaroma eingesetzt wird.

9. Verfahren zur Herstellung eines Innenraummaterials nach einem der Ansprüche 1 bis 8, **dadurch gekennzeichnet, daß** der mindestens eine schwerflüchtige Aromastoff durch darüberliegende Material- und/oder Lackschichten abgedeckt wird, so daß seine Diffusion und damit Emission ausreichend behindert wird, um eine langanhaltende Wirkung zu sichern.

10. Verfahren nach Anspruch 9, **dadurch gekennzeichnet, daß** der (die) schwerflüchtige(n) Aromastoff(e) dem Deckstrich oder einem darunterliegenden Kompakt- oder Schaumstrich zugesetzt wird (werden).

11. Verfahren nach Anspruch 9, **dadurch gekennzeichnet, daß** der (die) schwerflüchtige(n) Aromastoff(e) einer Lackschicht zugesetzt wird (werden).

12. Verfahren nach einem der Ansprüche 9 bis 11, **dadurch gekennzeichnet, daß** das Innenraummaterial abschließend zur Oberflächengestaltung unter milden Bedingungen geprägt wird.

13. Verwendung eines Innenraumaterials nach einem der Ansprüche 1 bis 8 oder hergestellt nach einem der Ansprüche 9 bis 12, im PKW-Innenraum.

14. Verwendung eines Innenmaterials nach einem der Ansprüche 1 bis 8 oder hergestellt nach einem der Ansprüche 9 bis 12, als Wandverkleidungsmaterial in Wohn- und Gesellschaftsräumen.

## Claims

1. Interior synthetic covering material with a content of at least one slow-evaporating aromatic substance, **characterised in that** the aromatic substance is covered by layers of material and/or paint disposed over it in such a manner that its diffusion and the associated emission is hindered sufficiently to achieve the effect of a long-lasting fragrance.

2. Interior synthetic covering material according to any one of the preceding claims, **characterised in that** a synthetic material of essentially neutral odour is used as the base material.

3. Interior synthetic covering material according to claim 1 or 2, **characterised in that** a synthetic material based on PVC, polyurethane, polyolefin, ABS, polymethacrylate, polycarbonate, polyacrylate or mixed polymers is used as the base material.

4. Interior synthetic covering material according to claim 1, 2 or 3, **characterised in that** the structure of the material and the aromatic substance(s) are matched to one another.

5. Interior synthetic covering material according to claim 4, **characterised in that** a leather aromatic oil is used with a material structure, which imitates leather.

6. Interior synthetic covering material according to claim 3 or 4, **characterised in that** a wood aromatic oil is used with a material structure which imitates wood.

7. Interior synthetic covering material according to any one of claims 4 to 6, **characterised in that**, optionally, at least one additional aromatic substance is used, which imitates the fragrance of a fresh environment.

8. Interior synthetic covering material according to claim 7, **characterised in that** a sea fragrance or lemon fragrance is used as the aromatic substance.

9. Method for manufacturing an interior synthetic covering material according to any one of claims 1 to 8, **characterised in that** the at least one slow-evaporating aromatic substance is covered by layers of material and/or paint disposed over it in such a manner that its diffusion and the associated emission is hindered sufficiently to ensure a long-lasting effect.

10. Method according to claim 9, **characterised in that** the slow-evaporating aromatic substance/s is/are added to a top coating or to a compact or foam layer disposed beneath the same.

11. Method according to claim 9, **characterised in that** the slow-evaporating aromatic substance/s is/are added to a paint layer.

12. Method according to any one of claims 9 to 11, **characterised in that** the interior synthetic covering material is subsequently stamped under mild conditions in order to achieve the surface design.

13. Use of an interior synthetic covering material according to any one of claims 1 to 8 or manufactured according to any one of claims 9 to 12 in the interior synthetic covering of a passenger vehicle.

14. Use of a interior synthetic covering material according to any one of claims 1 to 8 or manufactured according to any one of claims 9 to 12 as a wall-covering material in living rooms or social areas.

## Revendications

1. Matériau d'intérieur, à base de matière plastique, avec une teneur en au moins une substance aromatique difficilement volatile, **caractérisé en ce que** la substance aromatique est revêtue de couches de matériau et/ou de laque, de sorte que sa diffusion et ainsi, son émission soit suffisamment empêchée pour développer une action odorante durable.

2. Matériau d'intérieur selon l'une quelconque des revendications précédentes, **caractérisé en ce que** l'on met en oeuvre comme matériau de base, une matière plastique essentiellement neutre au niveau odeur.

3. Matériau d'intérieur la revendication 1 ou 2, **caractérisé en ce que** l'on met en oeuvre comme matériau de base, une matière plastique à base de PVC, de polyuréthanne, de polyoléfine, d'ABS, de polyméthacrylate, de polycarbonate, de polyacrylate ou de polymères mixtes.

4. Matériau d'intérieur la revendication 1, 2 ou 3, **caractérisé en ce que** la structure du matériau et de la ou des substances aromatiques est réglée l'une part rapport à l'autre.

5. Matériau d'intérieur la revendication 4, **caractérisé en ce que** l'on met en oeuvre pour une structure de matériau qui imite le cuir, une huile aromatique.de cuir.

6. Matériau d'intérieur la revendication 3 ou 4, **caractérisé en ce que** l'on met en oeuvre pour une structure de matériau qui imite le bois, une huile aromatique de bois.

7. Matériau d'intérieur selon l'une quelconque des revendications 4 à 6, **caractérisé en ce que** l'on met en oeuvre le cas échéant, en outre, au moins une substance aromatique, qui reproduit l'odeur d'un environnement frais.

8. Matériau d'intérieur la revendication 7, **caractérisé en ce que** l'on met en oeuvre comme substance aromatique, un arôme marin ou un arôme de citron.

9. Procédé de préparation d'un matériau d'intérieur selon l'une quelconque des revendications 1 à 8, **caractérisé en ce que** la au moins une substance aromatique difficilement volatile est couverte de couches de matériau et/ou de laque, de sorte que sa diffusion et ainsi, son émission soit suffisamment empêchée pour garantir une action durable.

10. Procédé selon la revendication 9, **caractérisé en ce que** la ou les substances aromatiques difficilement volatiles sont ajoutées à un enduit de couverture ou un enduit compact ou de mousse sous-jacent.

11. Procédé selon la revendication 9, **caractérisé en ce que** la ou les substances aromatiques difficilement volatiles sont ajoutées à une couche de vernis.

12. Procédé selon l'une quelconque des revendications 9 à 11, **caractérisé en ce que** le matériau d'intérieur est finalement estampé pour un équipement de surface, dans des conditions douces.

13. Utilisation d'un matériau d'intérieur selon l'une quelconque des revendications 1 à 8 ou préparé selon l'une quelconque des revendications 9 à 12, dans l'espace intérieur de voitures particulières.

14. Utilisation d'un matériau d'intérieur selon l'une quelconque des revendications 1 à 8 ou préparé selon l'une quelconque des revendications 9 à 12, comme matériau de revêtement de mur dans des espaces d'habitation ou de société.
